# FASCICULE DE BREVET EUROPEEN

(11) **EP 2 643 615 B1**
(45) Date de publication et mention de la délivrance du brevet: **06.01.2016**
(21) Numéro de dépôt: 11791505.8
(22) Date de dépôt: 23.11.2011
(51) Int. Cl.: F16H 55/14

(54) **ENGRENAGE, EN PARTICULIER POUR ACTIONNEUR DE VEHICULE AUTOMOBILE**
ZAHNRAD, INSBESONDERE FÜR EINEN KRAFTFAHRZEUGAKTUATOR
GEAR, IN PARTICULAR FOR A MOTOR VEHICLE ACTUATOR

(30) Priorité: 25.11.2010 FR 1004584
(43) Date de publication de la demande: 02.10.2013
(73) Titulaire: Valeo Systemes Thermiques, 78321 Le Mesnil Saint Denis (FR)
(72) Inventeur: DION, Nathalie, F-78530 Buc (FR); NAJI, Said, F-78990 Elancourt (FR); BARBEAU, Romain, F-78120 Rambouillet (FR)
(74) Mandataire: Fauré, Marion-Laurie
(86) Numéro de dépôt international: PCT/EP2011/070767
(87) Numéro de publication internationale: WO 2012/069517

(56) Documents cités:
- DE-A1-102008 019 041
- US-A- 5 927 149

## Description

L'invention concerne un engrenage, en particulier pour actionneur de véhicule automobile.

On peut citer en exemple un actionneur pour les vitres d'un véhicule automobile ou encore un actionneur de volets présents dans une installation de climatisation, tels que des volets d'obturation ou de mixage.

Les engrenages d'un tel actionneur peuvent provoquer des mouvements rapides voire brutaux, et des vibrations importantes peuvent alors être générées. En effet, lors du fonctionnement de l'engrenage les oscillations s'amplifient jusqu'à générer ces vibrations.

Ceci peut ainsi engendrer un bruit dans l'habitacle relativement gênant pour les occupants.

L'invention a donc pour objectif de limiter les vibrations générées de façon à réduire le bruit perçu par exemple par les occupants du véhicule automobile.

À cet effet, l'invention a pour objet un engrenage, en particulier pour actionneur de véhicule automobile, comprenant une première roue d'entraînement intérieure et au moins une seconde roue dentée extérieure coaxiale à ladite première roue, caractérisé en ce que ledit engrenage comporte en outre un moyen d'amortissement interposé entre ladite première roue et ladite seconde roue, de façon à remplir en partie l'espace entre ladite première roue et ladite seconde roue.

Ledit engrenage peut en outre comporter une ou plusieurs caractéristiques suivantes, prises séparément ou en combinaison :
- ladite première roue et ladite seconde roue sont réalisées en un premier matériau plastique et en ce que le moyen d'amortissement est réalisé en un second matériau présentant un coefficient d'amortissement supérieur à celui du premier matériau plastique desdites roues,
- ledit engrenage comporte des moyens de limitation de débattement angulaire entre lesdites roues par complémentarité de forme d'une part entre le moyen d'amortissement et ladite première roue et d'autre part entre le moyen d'amortissement et ladite seconde roue,
- le moyen d'amortissement présente sur sa face intérieure des dentures intérieures complémentaires de premières dentures prévues sur la face extérieure de ladite première roue en vis-à-vis, et sur sa face extérieure, des dentures extérieures complémentaires de secondes dentures prévues sur la face intérieure de ladite seconde roue en vis-à-vis,
- ladite première roue présente sur sa face extérieure au moins une première nervure s'étendant vers ladite seconde roue, et ladite seconde roue présente sur sa face intérieure au moins deux secondes nervures parallèles entre elles et en saillie radiale hors de ladite seconde roue, les secondes nervures s'étendent vers ladite première roue en présentant une forme générale sensiblement en « U » et délimitant un espace dans lequel s'étend tout ou partie de ladite première nervure de ladite première roue,
- ladite première roue comporte un nombre prédéfini de premières nervures réparties uniformément selon un angle d'écart prédéfini selon le nombre de premières nervures, et ladite seconde roue comporte des paires de secondes nervures selon le nombre prédéfini de premières nervures, délimitant par paire des butées au déplacement angulaire de ladite première roue par rapport à ladite seconde roue,
- ladite première roue présente quatre premières nervures respectivement décalées d'un angle de 90°, et ladite seconde roue présente huit secondes nervures formant deux à deux une forme générale sensiblement en « U », lesdites formes en « U » étant respectivement décalées d'un angle de 90°.

L'invention concerne aussi un procédé de fabrication d'un engrenage tel que défini ci-dessus, caractérisé en ce qu'il comprend les étapes suivantes :
- on moule ladite première roue d'entraînement et ladite seconde roue dentée à partir d'un premier matériau plastique, et
- on moule le moyen d'amortissement à partir d'un second matériau de coefficient d'amortissement supérieur au premier matériau:

Selon un mode de réalisation, lesdites étapes de moulage se font en une même opération.

Selon une variante de réalisation, le moyen d'amortissement est réalisé par une étape de surmoulage desdites première et seconde roues.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente de façon schématique un engrenage selon un premier mode de réalisation non revendiqué,
- la figure 2 représente de façon schématique un engrenage selon un deuxième mode de réalisation,
- la figure 3 représente de façon schématique un engrenage selon un troisième mode de réalisation,
- la figure 4 représente de façon schématique un engrenage selon un quatrième mode de réalisation non revendiqué, et
- la figure 5 représente de façon schématique un engrenage selon un cinquième mode de réalisation non revendiqué.

Dans ces figures, les éléments sensiblement identiques portent les mêmes références.

L'invention concerne un engrenage en particulier pour un actionneur d'un véhicule automobile, tel qu'un actionneur pour les vitres d'un véhicule ou encore pour volets dans une installation de climatisation par exemple.

### Premier mode de réalisation

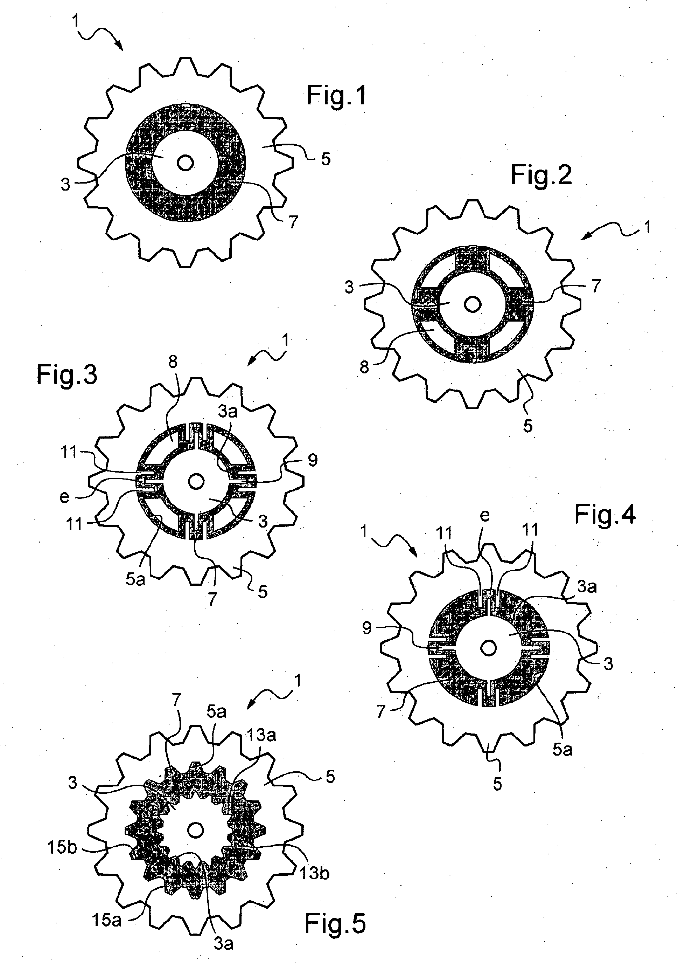

On a représenté sur la figure 1 un premier mode de réalisation non revendiqué d'un tel engrenage 1.

L'engrenage 1 présente une structure en « sandwich », c'ést-à-dire que l'engrenage 1 comporte :
- une première roue intérieure 3, dite roue d'entraînement,
- au moins une seconde roue extérieure 5 coaxiale à la première roue 3, et
- entre les deux roues intérieure 3 et extérieure 5, un moyen d'amortissement 7.

La première roue intérieure 3 est configurée pour être fixée à un axe d'entraînement (non représenté) de l'engrenage 1.

Cette première roue intérieure 3 est réalisée dans un premier matériau plastique.

La seconde roue extérieure 5 est une roue dentée entraînée par la première roue 3. Cette seconde roue 5 est également réalisée en matière plastique, par exemple le même premier matériau plastique de la roue intérieure 3.

Le moyen d'amortissement 7 est quant à lui réalisé en un second matériau souple, tel que de l'élastomère, du silicone ou tout autre matériau présentant un coefficient d'amortissement supérieur à celui du premier matériau plastique utilisé pour les roues intérieure 3 et extérieure 5.

À titre d'exemple, les matériaux couramment utilisés sont : le polyoxyméthylène couramment appelé POM, le polyamide 66 (PA 66), PPGFXX

Afin de réduire au mieux les vibrations de l'engrenage 1, on peut choisir de remplir complètement l'espace entre la roue intérieure 3 et la roue extérieure 5 avec le moyen d'amortissement 7.

Le moyen d'amortissement 7 présente alors une forme générale sensiblement de couronne et forme donc une couronne déformable 7.

Comparativement à une solution traditionnelle, la couronne déformable 7 de ce premier mode dé réalisation donne à l'engrenage une capacité d'amortissement en torsion qui est supérieure, favorisant de la sorte la réduction du transfert d'oscillation.

### Second mode de réalisation

Selon un second mode de réalisation illustré sur la figure 2, le moyen d'amortissement 7 n'est pas disposé dans tout l'espace entre les roues intérieure 3 et extérieure 5, mais selon un pourcentage donné. Ce moyen d'amortissement 7 présente donc des lumières 8 dépourvues du second matériau. Les lumières 8 peuvent présenter à titre d'exemple non limitatif une forme générale sensiblement en arc de cercle et sont par exemple uniformément réparties autour de la première roue 3.

Avec ces lumières 8, le moyen d'amortissement 7 présente donc une forme générale sensiblement de couronne ajourée.

Cet agencement permet de transmettre le couple de l'axe d'entraînement (non représenté) vers la roue extérieure 5 en limitant un peu les vibrations dues aux oscillations.

Le choix de la géométrie d'agencement du moyen d'amortissement 7 est déterminé en fonction du couple à transmettre et des vibrations à réduire.

Ainsi, un tel engrenage 1 comprend un moyen d'amortissement 7 sensiblement en forme de couronne ajourée et déformable. Un tel engrenage 1 permet avantageusement d'avoir une capacité d'amortissement en torsion qui soit supérieure à celle d'un engrenage de type plein, c'est-à-dire dont le moyen d'amortissement 7 remplit tout l'espace entre la roue intérieure 3 et la roue extérieure 5, comme représenté sur la figure 1.

Les espaces ajourés ou lumières 8 permettent avantageusement de réduire le transfert d'oscillation tout en contribuant à un gain de masse par rapport à un engrenage dépourvu d'espace ajouré comme dans le premier mode de réalisation illustré sur la figure 1.

En variante ou en complément de ces deux modes de réalisation, on peut prévoir des moyens de limitation de débattement angulaire entre les roues intérieure 3 et extérieure 5, par exemple par une complémentarité de forme d'une part entre le moyen d'amortissement 7 et la première roue intérieure 3 et d'autre part entre le moyen d'amortissement 7 et la seconde roue extérieure 5.

### Troisième mode de réalisation

En effet, un troisième mode de réalisation illustré sur la figure 3, diffère du deuxième mode de réalisation illustré sur la figure 2, par le fait que la roue intérieure 3 présente une ou plusieurs premières nervures 9 et le fait que la roue extérieure 5 présente également une ou plusieurs paires de secondes nervures 11 pour augmenter la transmission du couple et limiter le débattement angulaire entre les deux roues 3 et 5.

Plus précisément, selon ce troisième mode de réalisation, la première roue 3 présente sur sa face extérieure 3a en vis-à-vis du moyen d'amortissement 7, au moins une première nervure 9 s'étendant vers la seconde roue 5.

De façon complémentaire, la seconde roue 5 présente sur sa face intérieure 5a en vis-à-vis avec le moyen d'amortissement 7, au moins deux secondes nervures 11 parallèles entre elles et en saillie radiale hors de la seconde roue 5, s'étendant vers la première roue 3 en présentant une forme générale sensiblement en « U ». Plus précisément, les deux secondes nervures 11 forment les branches latérales d'un « U » en délimitant un espace e, et cet espace e est agencé sensiblement au niveau d'une première nervure 9 de la première roue 3.

Une paire de secondes nervures 11 délimite une butée au déplacement angulaire de la première roue 3 par rapport à la seconde roue 5.

Le moyen d'amortissement 7 peut donc être agencé au niveau de ces premières 9 et secondes 11 nervures des roues intérieure 3 et extérieure 5, plus précisément dans l'espace e formé par les deux secondes nervures 11 d'une paire et donc autour des premières nervures 9.

En outre, selon l'exemple illustré, la première roue 3 présente quatre premières nervures 9 uniformément réparties sur sa face intérieure 3a, donc en étant respectivement décalées sensiblement d'un angle de 90°.

De même, la seconde roue présente quatre paires de secondes nervures 11 formant respectivement des « U » centrés sur les premières nervures 9. Les centres de ces formes en « U » sont donc également sensiblement décalées d'un angle de 90°.

Bien entendu, on peut prévoir tout autre agencement des nervures 9,11 et tout autre angle de décalage.

Ainsi, de façon préférée, dans ce troisième mode de réalisation, la roue intérieure 3 comprend au moins deux premières nervures 9, et la roue extérieure 5 comprend le même nombre de paires de secondes nervures 11.

De manière non limitative, la roue intérieure 3 comprend quatre premières nervures 9 disposées en partie à l'intérieur d'espaces e délimités par quatre paires de secondes nervures 11 de la roue extérieure 5.

Selon un mode de réalisation non représenté, les nervures de limitation du débattement angulaire de la roue 3 par rapport à la roue 5 ne suivent pas une répartition uniforme sur la surface périphérique intérieure ou extérieure de chaque roue 3 et 5, ce qui a un effet bénéfique de réduction du bruit, en évitant tout effet de résonance ou d'amplification du bruit. C'est la raison pour laquelle les angles séparant les nervures 9 ou les paires de nervures 11 sont différents.

On peut aussi choisir de remplir complètement l'espace entre la roue intérieure 3 et la roue extérieure 5, et de prévoir en outre les moyens de limitation de débattement angulaire entre les roues intérieure 3 et extérieure 5, comme l'illustrent les figures 4 et 5.

### Quatrième mode de réalisation

En effet, selon le quatrième mode de réalisation non revendiqué illustré sur la figure 4, le moyen d'amortissement 7 remplit tout l'espace entre les deux roues 3 et 5 de façon similaire au premier mode de réalisation de la figure 1, et la première roue intérieure 3 présente sur sa face extérieure 3a une ou plusieurs nervures 9 et la seconde roue extérieure 5 présente sur sa face intérieure 5a une ou plusieurs paires de secondes nervures 11 tel que décrit dans le troisième mode de réalisation.

Ainsi, de façon similaire au troisième mode de réalisation, la roue intérieure 3 comprend au moins deux premières nervures 9, et la roue extérieure 5 comprend le même nombre de paires de secondes nervures 11.

De manière non limitative, la roue intérieure 3 comprend quatre premières nervures 9 disposées en partie à l'intérieur d'espaces e délimités par quatre paires de secondes nervures 11 de la roue extérieure 5.

Selon un mode de réalisation non représenté, les nervures de limitation du débattement angulaire de la roue 3 par rapport à la roue 5 ne suivent pas une répartition uniforme sur la surface périphérique intérieure ou extérieure de chaque roue 3 et 5, ce qui a un effet bénéfique de réduction du bruit, en évitant tout effet de résonance ou d'amplification du bruit. C'est la raison pour laquelle les angles séparant les nervures 9 ou les paires de nervures 11 sont différents.

Dans les troisième et quatrième modes de réalisation, on a décrit une complémentarité de forme à l'aide de nervures 9,11. Mais on peut bien sûr prévoir toute autre complémentarité de forme entre d'une part le moyen d'amortissement 7 et la première roue intérieure 3 et d'autre part le moyen d'amortissement 7 et la seconde roue extérieure 5.

### Cinquième mode de réalisation

À titre d'exemple, selon un cinquième mode de réalisation non revendiqué, la complémentarité de forme se fait via des dentures 13a, 3b et 15a, 15b.

Plus précisément, la première roue intérieure 3 présente sur sa face extérieure 3a des premières dentures 13a et le moyen d'amortissement 7 présente sur sa face intérieure 7a en vis-à-vis de la face extérieure 3a de la première roue 3, des dentures intérieures 13b complémentaires des premières dentures 13a de la première roue 3.

De même, la seconde roue extérieure 5 présente sur sa face intérieure 5a des secondes dentures 15a et le moyen d'amortissement 7 présente sur sa face extérieure 7b en vis-à-vis de la face intérieure 5a de la seconde roue 5, des dentures extérieures 15b complémentaires des secondes dentures 15a de la seconde roue 5.

Les dentures 15a et 15b sont de forme sensiblement sinusoïdale ce qui tend à limiter de manière progressive le débattement angulaire tout en maintenant une capacité d'amortissement en torsion. Comparativement à l'engrenage selon le premier mode de réalisation de la figure 1, l'engrenage de la figure 5 augmente le transfert de couple, se rapprochant même d'un engrenage traditionnel.

Ainsi, on limite efficacement les vibrations générées pendant le mouvement de rotation tout en transmettant le couple de l'axe d'entraînement vers la seconde roue extérieure.

Par ailleurs, pour tous ces modes de réalisation décrits, le procédé de fabrication de l'engrenage 1 comprend au moins une étape dans laquelle on moule la première 3 et la seconde 5 roues de l'engrenage 1 à partir du premier matériau plastique, et une étape dans laquelle on moule le moyen d'amortissement 7 à partir du second matériau de plus fort coefficient d'amortissement.

Ces étapes peuvent se faire en une même opération, on parle de « one shot process » en anglais, par exemple dans une presse à double injection.

Le moyen d'amortissement 7 peut par exemple être réalisé par une étape de surmoulage des première 3 et seconde 5 roues.

Un tel engrenage 1 avec une structure en sandwich peut donc être utilisé dans un actionneur et permettre de limiter le bruit généré lors du fonctionnement de l'actionneur et en particulier améliorer le confort des occupants de l'habitacle d'un véhicule automobile.

En effet, on limite au sein même de l'engrenage la génération de vibrations afin de réduire les vibrations propagées dans l'habitacle.

## Revendications

1. Engrenage, en particulier pour actionneur de véhicule automobile, comprenant une première roue d'entraînement intérieure (3) et au moins une seconde roue dentée extérieure coaxiale à ladite première roue (3), **caractérisé en ce que** ledit engrenage comporte en outre un moyen d'amortissement (7) interposé entre ladite première roue (3) et ladite seconde roue (5), de façon à remplir en partie l'espace entre ladite première roue (3) et ladite seconde roue (5).

2. Engrenage selon la revendication 1, **caractérisé en ce que** ladite première roue (3) et ladite seconde roue (5) sont réalisées en un premier matériau plastique et **en ce que** le moyen d'amortissement (7) est réalisé en un second matériau présentant un coefficient d'amortissement supérieur à celui du premier matériau plastique desdites roues (3,5).

3. Engrenage selon l'une quelconque des revendications précédentes, **caractérisé en ce qu'**il comporte des moyens de limitation de débattement angulaire entre lesdites roues (3,5) par complémentarité de forme d'une part entre le moyen d'amortissement (7) et ladite première roue (3) et d'autre part entre le moyen d'amortissement (7) et ladite seconde roue (5).

4. Engrenage selon la revendication 3, **caractérisé en ce que** le moyen d'amortissement (7) présente :
- sur sa face intérieure (7a), des dentures intérieures (13b) complémentaires de premières dentures (13a) prévues sur la face extérieure (3a) de ladite première roue (3) en vis-à-vis, et
- sur sa face extérieure (7b), des dentures extérieures (15b) complémentaires de secondes dentures (15a) prévues sur la face intérieure (5a) de ladite seconde roue (5) en vis-à-vis.

5. Engrenage selon la revendication 3, **caractérisé en ce que** :
- ladite première roue (3) présente sur sa face extérieure (3a) au moins une première nervure (9) s'étendant vers ladite seconde roue (5), et **en ce que**
- ladite seconde roue (5) présente sur sa face intérieure (5a) au moins deux secondes nervures (11) parallèles entre elles et en saillie radiale hors de ladite seconde roue, les secondes nervures s'étendent vers ladite première roue (3) en présentant une forme générale sensiblement en « U » et délimitant un espace (e) dans lequel s'étend tout au partie de ladite première nervure (9) de ladite première roue (3).

6. Engrenage selon la revendication 5, **caractérisé en ce que** :
- ladite première roue (3) comporte un nombre prédéfini de premières nervures (9) réparties uniformément selon un angle d'écart prédéfini selon le nombre de premières nervures, et **en ce que**
- ladite seconde roue (5) comporte des paires de secondes nervures (11) selon le nombre prédéfini de premières nervures (9), délimitant par paire des butées au déplacement angulaire de ladite première roue par rapport à ladite seconde roue.

7. Engrenage selon la revendication 6, **caractérisé en ce que** :
- ladite première roue (3) présente quatre premières nervures (9) respectivement décalées d'un angle de 90°, et **en ce que**
- ladite seconde roue (5) présente huit secondes nervures (11) formant deux à deux une forme générale sensiblement en « U », lesdites formes en « U » étant respectivement décalées d'un angle de 90°.

8. Procédé de fabrication d'un engrenage selon la revendication 2 prise en combinaison avec l'une quelconque des revendications précédentes, **caractérisé en ce qu'**il comprend les étapes suivantes :
- on moule ladite première roue d'entraînement (3) et ladite seconde roue dentée (5) à partir d'un premier matériau plastique, et
- on moule le moyen d'amortissement (7) à partir d'un second matériau de coefficient d'amortissement supérieur au premier matériau.

9. Procédé de fabrication selon la revendication 8, **caractérisé en ce que** lesdites étapes de moulage se font en une même opération.

10. Procédé de fabrication selon la revendication 8, **caractérisé en ce que** le moyen d'amortissement (7) est réalisé par une étape de surmoulage desdites première et seconde roues (3, 5).

## Patentansprüche

1. Zahnradgetriebe, insbesondere für einen Stellantrieb eines Kraftfahrzeugs, das ein erstes inneres Antriebsrad (3) und mindestens ein zweites äußeres Zahnrad koaxial zum ersten Rad (3) enthält, **dadurch gekennzeichnet, dass** das Zahnradgetriebe außerdem eine Dämpfungseinrichtung (7) aufweist, die zwischen das erste Rad (3) und das zweite Rad (5) eingefügt ist, um den Raum zwischen dem ersten Rad (3) und dem zweiten Rad (5) zum Teil zu füllen.

2. Zahnradgetriebe nach Anspruch 1, **dadurch gekennzeichnet, dass** das erste Rad (3) und das zweite Rad (5) aus einem ersten Kunststoffmaterial hergestellt werden, und dass die Dämpfungseinrichtung (7) aus einem zweiten Material hergestellt wird, das einen höheren Dämpfungskoeffizienten aufweist als der des ersten Kunststoffmaterials der Räder (3, 5).

3. Zahnradgetriebe nach einem der vorhergehenden Ansprüche, **dadurch gekennzeichnet, dass** es Winkelspiel-Begrenzungseinrichtungen zwischen den Rädern (3, 5) durch Formkomplementarität einerseits zwischen der Dämpfungseinrichtung (7) und dem ersten Rad (3) und andererseits zwischen der Dämpfungseinrichtung (7) und dem zweiten Rad (5) aufweist.

4. Zahnradgetriebe nach Anspruch 3, **dadurch gekennzeichnet, dass** die Dämpfungseinrichtung (7) aufweist:
- auf ihrer Innenseite (7a) innere Verzahnungen (13b) komplementär zu ersten Verzahnungen (13a), die auf der Außenseite (3a) des gegenüberliegenden ersten Rads (3) vorgesehen sind, und
- auf ihrer Außenseite (7b) äußere Verzahnungen (15b) komplementär zu zweiten Verzahnungen (15a), die auf der Innenseite (5a) des gegenüberliegenden zweiten Rads (5) vorgesehen sind.

5. Zahnradgetriebe nach Anspruch 3, **dadurch gekennzeichnet, dass**:
- das erste Rad (3) auf seiner Außenseite (3a) mindestens eine erste Rippe (9) aufweist, die sich zum zweiten Rad (5) erstreckt, und dass
- das zweite Rad (5) auf seiner Innenseite (5a) mindestens zwei zueinander parallele und radial aus dem zweiten Rad heraus vorstehende zweite Rippen (11) aufweist, wobei die zweiten Rippen sich zum ersten Rad (3) erstrecken, indem sie eine allgemeine U-Form aufweisen und einen Raum (e) begrenzen, in dem sich die ganze oder ein Teil der ersten Rippe (9) des ersten Rads (3) erstreckt.

6. Zahnradgetriebe nach Anspruch 5, **dadurch gekennzeichnet, dass**:
- das erste Rad (3) eine vordefinierte Anzahl von ersten Rippen (9) aufweist, die gleichmäßig gemäß einem entsprechend der Anzahl von ersten Rippen vordefinierten Abstandswinkel verteilt sind, und dass
- das zweite Rad (5) Paare von zweiten Rippen (11) entsprechend der vordefinierten Anzahl von ersten Rippen (9) aufweist, die paarweise Anschläge für die Winkelverschiebung des ersten Rads bezüglich des zweiten Rads begrenzen.

7. Zahnradgetriebe nach Anspruch 6, **dadurch gekennzeichnet, dass**:
- das erste Rad (3) vier erste Rippen (9) aufweist, die um einen Winkel von 90° versetzt sind, und dass
- das zweite Rad (5) acht zweite Rippen (11) aufweist, die paarweise eine allgemeine U-Form bilden, wobei die U-Formen je um einen Winkel von 90° versetzt sind.

8. Verfahren zur Herstellung eines Zahnradgetriebes nach Anspruch 2 in Kombination mit einem der vorhergehenden Ansprüche, **dadurch gekennzeichnet, dass** es die folgenden Schritte enthält:
- das erste Antriebsrad (3) und das zweite Zahnrad (5) werden ausgehend von einem ersten Kunststoffmaterial geformt, und
- die Dämpfungseinrichtung (7) wird ausgehend von einem zweiten Material mit einem höheren Dämpfungskoeffizient als das erste Material geformt.

9. Herstellungsverfahren nach Anspruch 8, **dadurch gekennzeichnet, dass** die Formschritte in einem Vorgang ausgeführt werden.

10. Herstellungsverfahren nach Anspruch 8, **dadurch gekennzeichnet, dass** die Dämpfungseinrichtung (7) durch einen Schritt des Überformens der ersten und zweiten Räder (3, 5) hergestellt wird.

## Claims

1. Gear pair, in particular for a motor vehicle actuator, comprising a first internal drive wheel (3) and at least one second external toothed wheel which is coaxial with the first wheel (3), **characterized in that** the gear pair further comprises a damping means (7) which is interposed between the first wheel (3) and the second wheel (5) so as to fill part of the space between the first wheel (3) and the second wheel (5).

2. Gear pair according to Claim 1, **characterized in that** the first wheel (3) and the second wheel (5) are produced from a first plastics material and **in that** the damping means (7) is produced from a second material which has a damping coefficient which is greater than that of the first plastics material of the wheels (3, 5).

3. Gear pair according to either of the preceding claims, **characterized in that** it comprises means for limiting angular displacement between the wheels (3, 5) by means of complementary shaping, on the one hand, between the damping means (7) and the first wheel (3) and, on the other hand, between the damping means (7) and the second wheel (5).

4. Gear pair according to Claim 3, **characterized in that** the damping means (7) has:
- on the inner face (7a) thereof, inner teeth (13b) which complement first teeth (13a) provided on the outer face (3a) of the first wheel (3) located opposite, and,
- on the outer face (7b) thereof, external teeth (15b) which complement second teeth (15a) provided on the inner face (5a) of the second wheel (5) located opposite.

5. Gear pair according to Claim 3, **characterized in that**:
- the first wheel (3) has, on the outer face (3a) thereof, at least one first rib (9) which extends towards the second wheel (5), and **in that**
- the second wheel (5) has on the inner face (5a) thereof at least two second ribs (11) which are parallel with each other and which protrude radially from the second wheel, the second ribs extend towards the first wheel (3), generally being substantially U-shaped and delimiting a space (e) in which all or a portion of the first rib (9) of the first wheel (3) extends.

6. Gear pair according to Claim 5, **characterized in that**:
- the first wheel (3) comprises a predefined number of first ribs (9) which are distributed uniformly at a predefined spacing angle in accordance with the number of first ribs, and **in that**
- the second wheel (5) comprises pairs of second ribs (11) in accordance with the predefined number of first ribs (9), delimiting in pairs stops for the angular displacement of the first wheel relative to the second wheel.

7. Gear pair according to Claim 6, **characterized in that**:
- the first wheel (3) has four first ribs (9) which are offset through an angle of 90°, respectively, and **in that**
- the second wheel (5) has eight second ribs (11) which form in pairs a generally substantially "U"-like shape, the "U"-like shapes being offset by an angle of 90°, respectively.

8. Production method for a gear pair according to Claim 2, taken in combination with any one of the preceding claims, **characterized in that** it comprises the following steps:
- the first drive wheel (3) and the second toothed wheel (5) are molded from a first plastics material, and
- the damping means (7) is molded from a second material having a damping coefficient greater than the first material.

9. Production method according to Claim 8, **characterized in that** the molding steps are carried out in the same operation.

10. Production method according to Claim 8, **characterized in that** the damping means (7) is produced by means of a step for overmolding the first and second wheels (3, 5).
